# EUROPEAN PATENT APPLICATION

(11) **EP 2 636 580 A1**
(43) Date of publication of application: **11.09.2013**
(21) Application number: 12158315.7
(22) Date of filing: 06.03.2012
(51) Int. Cl.: B62J 7/08, B62J 11/00, B62J 9/00, B62J 7/04

(54) **A fixing system for a seat post of a bicycle**

(71) Applicant: Fisher Outdoor Leisure Limited, St Albans, Hertfordshire AL1 5UG (GB)
(72) Inventor: Handoll, Robert, St. Albans AL1 UG Hertfordshire (GB)
(74) Representative: Fluit, Jeroen

(57) **Abstract**

A fixing system (1) for a seat post (9) of a bicycle, comprising: a connector (5) for connecting to the seat post (9); a stem portion (2) connected to the connector (5) and having a first side (26) and a second side (28) substantially perpendicular to the first side (26), wherein a first aperture (21) is formed at the first side (26) of the stem portion (2) and a second aperture (23) is formed at the second side (28) of the stem portion (2); a tail portion (4) having a third side (41) and a fourth side (42) substantially perpendicular to the third side (41), and having a shaft (45) arranged at the fourth side (42) of the tail portion (4), and wherein the stem portion (2) and the tail portion (4) are combined to be substantially perpendicular to one another while inserting the shaft (45) into the first aperture (21) of the stem portion (2), and wherein the stem portion (2) and the tail portion (4) are combined to be substantially horizontal to one another while inserting the shaft (45) into the second aperture (23) of the stem portion (2); and a bag attachment being able to be combined with the tail portion (4).

## Description

### Technical Field

The present invention generally relates to a fixing system. More specifically, the present invention relates to a fixing system for mounting a bag to a bicycle.

### Background of Invention

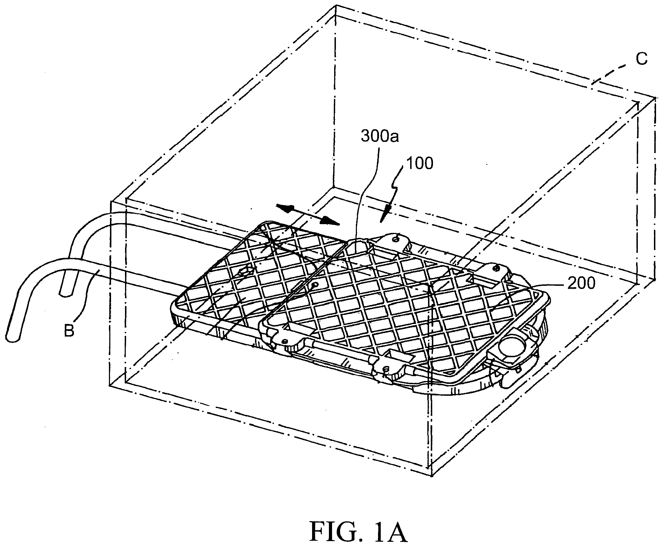

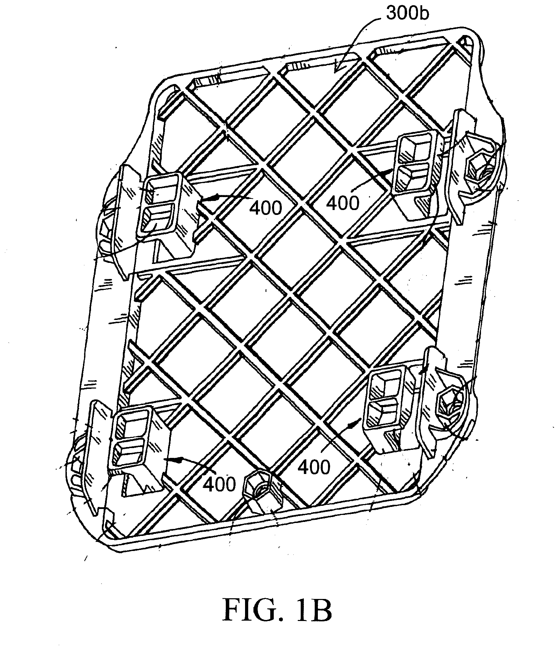

Many bicycles have a fixing system for mounting a bag or a baggage thereon. A known assembly for attaching a bag to a bicycle is shown in EP Publication No. 1571072A2 (please see Figs. 1A and 1 B). In the EP application, the device 100 for fixing a container C (e.g., a bag or baggage) to a bicycle comprises a plate 200, with an upside face 300a of which it is possible to associate a container C. Further, the plate 200 has, at the downside face 300b, means 400 for anchoring to a plate-like element P, which is supported by a bar B for connection to the frame of a bicycle and is kept suspended, in a substantially position, above a wheel of the bicycle. However, the container C fixed on the device 100 cannot be positioned at a horizontal or vertical position on the device 100. Thus, the user cannot change the position of the container C for the sake of convenience when the container C is fixed to the device 100. Further, the device 100 does not have any locking mechanism for locking the plate 200 to the plate-like element P and thus the container C mounted to the bicycle is unstable. In addition, since the device 100 is supported by the bar B and the bar B is coupled to the frame of a bicycle, the device 100 is not easily assembled onto the bicycle or disassembled from the bicycle.

In view of the above, there exists a need for an improved fixing system for mounting a bag to a bicycle. The present invention addresses this need as well as other needs, which will become apparent to the persons skilled in the art from the disclosure of the present invention.

### Summary of the Invention

An object of the present invention is to provide a fixing system for a seat post of a bicycle which can position a bag.

Another objective of the present invention is to provide a fixing system for a seat post of a bicycle which can be arranged at the seat post of the bicycle.

Another objective of the present invention is to provide a fixing system for a seat post of a bicycle which can fasten and fix the bag mounted to the fixing system.

Another objective of the present invention is to provide a fixing system for a seat post of a bicycle which can be easily assembled onto the bicycle and easily disassembled from the bicycle.

A further objective of the present invention is to provide a fixing system for a seat post of a bicycle which enables that the bag can be mounted to the seat post and/or dismounted from the seat post easily.

To achieve at least on of the above objectives, the present invention provides a fixing system for a seat post of a bicycle, comprising a connector (5) for connecting to the seat post (9); a stem portion (2) connected to the connector (5) and having a first side (26) and a second side (28) substantially perpendicular to the first side (26), wherein a first aperture (21) is formed in the first side (26) of the stem portion (2) and a second aperture (23) is formed in the second side (28) of the stem portion (2); a tail portion (4) having a third side (41) and a fourth side (42) substantially perpendicular to the third side (41), and having a shaft (45) arranged at the fourth side (42) of the tail portion (4), and wherein the stem portion (2) and the tail portion (4) are combinable to be substantially perpendicular to one another while inserting the shaft (45) into the first aperture (21) of the stem portion (2), and wherein the stem portion (2) and the tail portion (4) are combinable to be substantially horizontal to one another while inserting the shaft (45) into the second aperture (23) of the stem portion (2); and a bag attachment (7) being able to be combinable with the tail portion (4).

### Brief Description of the Drawings

Figs. 1A and 1 B show a conventional device for attaching a container to a bicycle, as disclosed in EP Publication No. 1571072A2;
Fig. 2A shows the fixing system in accordance with a preferred embodiment, with the insertion of the bag in a horizontal configuration;
Fig. 2B shows the fixing system in accordance with the preferred embodiment, with the insertion of the bag in a vertical configuration;
Fig. 3 is a schematic view illustrating the stem portion and the tail portion of the fixing system in accordance with the preferred embodiment;
Fig. 4A and Fig. 4B show the stem portion and the tail portion of the fixing system shown in Fig. 2A in the horizontal configuration;
Fig. 5A and Fig 5B show the stem portion and the tail portion of the fixing system shown in Fig. 2B in the vertical configuration; and
Fig. 6A and Fig. 6B show the combination of the tail portion and the bag attachment of the fixing system in accordance with the preferred embodiment.

### Detailed Description of the Embodiment

The preferred embodiment is illustrated below with reference to the drawings, and the reference numerals are shown in the figures to indicate the corresponding elements.

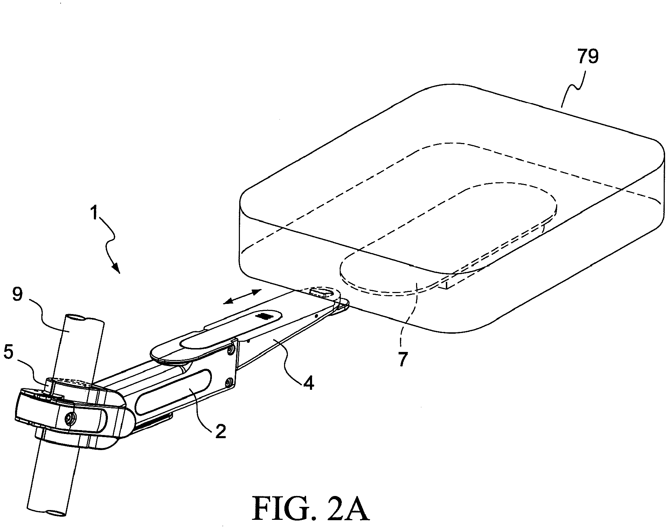

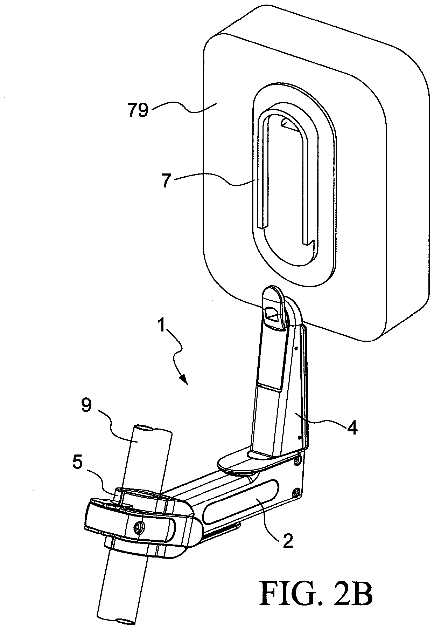

The subject invention is related to a fixing system for mounting a bag to a bicycle. Figs. 2A and 2B show the fixing system according to the present invention, with the insertion of the bag in a horizontal configuration and with the insertion of the bag in a vertical configuration, respectively. The fixing system 1 comprises a connector 5, a stem portion 2, a tail portion 4 and a bag attachment 7. The connector 5 is arranged at an end of the stem portion 2 and is fixed thereto. The stem portion 2 and the tail portion 4 are separable and they could be combined at the other end of the stem portion 2 in a horizontal configuration or vertical configuration. Further, the tail portion 4 and the bag attachment 7 are separable and can be combined with each other.

The connector 5 is a quick release connector and can be fixed to a seat post 9 of a bicycle such that the fixing system 1 is attached to the bicycle. The bag attachment 7 is used for attaching to a bag 79 and can be combined with the tail portion 4 such that the bag 79 which is attached to the bag attachment 7 can be mounted to the bicycle when the bag attachment 7 is combined with the tail portion 4. As shown in Fig. 2A, the stem portion 2 and the tail portion 4 are combined in the horizontal configuration such that when the bag attachment 7 is combined with the tail portion 4, the bag 79 with the bag attachment 7 is positioned at a horizontal position on the fixing system 1. Further, as shown in Fig. 2B, the stem portion 2 and the tail portion 4 are combined in the vertical configuration such that when the bag attachment 7 is combined with the tail portion 4, the bag 79 with the bag attachment 7 is positioned at a vertical position on the fixing system 1.

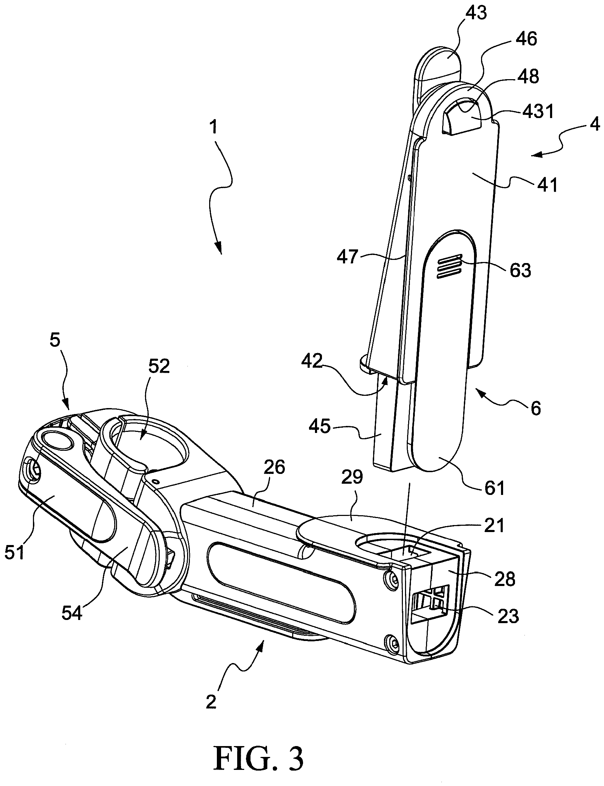

Fig. 3 is a schematic view illustrating the stem portion 222 and the tail portion 4 of the fixing system 1. As shown in Fig. 3, the connector 5 of the fixing system 1 further has a mouth 52 for receiving the seat post 9 of a bicycle and a handle 54 pivotally connected to the mouth 52. The user can move the handle 54 so as to open or close the mouth 52. When the mouth 52 is closed, the connector 5 is tied to the sear post 9 of the bicycle (referring to Figs. 2A and 2B) and thus the fixing system 1 is mounted to the bicycle. Otherwise, when the mouth 52 is opened, the connector 5 is released from the seat post 9 of the bicycle and the fixing system 1 is dismounted from the bicycle. In addition, the connector 5 has a strap 51 for further securing the connector 5. When the mouth 52 is closed and the connector 5 is tied to the seat post 9 of the bicycle, the strap 51 can wrap the mouth 52 and handle 54 such that the handle 54 cannot be moved and the connector 5 is tied to the seat post 9 securely. The connector 5 has a bolt (not shown) which can be tightened using, for example, a 5mm allen key such that the fixing system 1 can be secured onto the seat post 9. Further, the connector 5 can also have three rubber rims (not shown) provided of different thicknesses. These rubber rims can be inserted in between the mouth 52 and seat post 9 so that the connector 5 can be tied to different seat post sizes.

As shown in Fig. 3, in the current preferred embodiment, the stem portion 2 is integrated with the connector 5 and further has a first side 26 (i.e., top side) and a second side 28 at the other end of the stem portion and substantially perpendicular to the first side 26. A first aperture 21 is formed at the first side 26 of the stem portion 2 and a second aperture 23 is formed at the second side 28 of the stem portion 2. In addition, a flange 29 is formed at the first side 26 of the stem portion 2, substantially around the first aperture 21.

Further, as shown in Fig. 3, the tail portion 4 has a third side 41 (i.e., top side) and a fourth side 42 close to the other end of the stem portion 2 and substantially perpendicular to the third side 41. A shaft 45 extends from the fourth side 42 of the tail portion 4, substantially perpendicular to the fourth side 42 of the tail portion 4. In addition, a flange 47 is formed along the peripheral of the third side 41 of the tail portion 4.

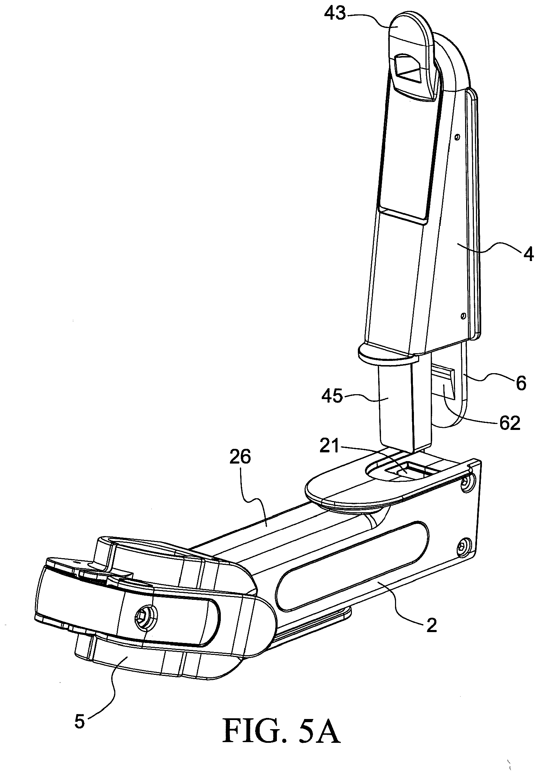

The tail portion 4 further has a spring-loaded clip 6 arranged at the third side 41 thereof, wherein a first end 61 of the clip 6 extends out of the fourth side 42 of the tail portion 4 and a protrusion 62 (referring to Fig. 5A) is formed at the bottom of the first end 61. Normally, the clip 6 is kept to be substantially parallel to the third side 41 of the tail portion 4 by the spring force. When a second end 63 of the clip 6 is pressed, the first end 61 is lifted slightly. Once the second end 63 of the clip 6 is not pressed, the first end 61 is sprung back.

In addition, an aperture 48 is formed at an end 46 of the tail portion 4 and an elastic buckle 43 is arranged at the bottom of the end 46 of the tail portion 4, wherein the elastic buckle 43 has a protrusion 431 extending through the aperture 48.

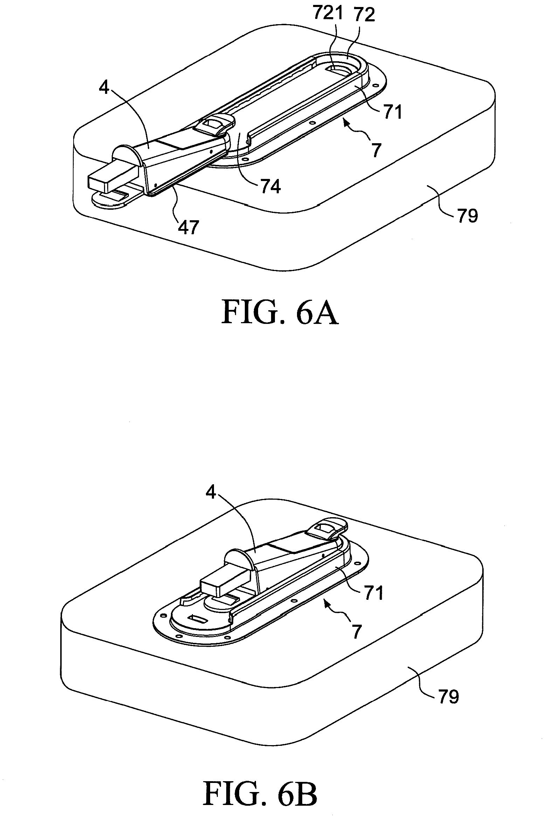

Moreover, as shown in Fig. 6A, the bag attachment 7 has a sliding slot 71 formed at one side thereof. The other side of the bag attachment 7 is used for attaching to a bag 79 (referring to Figs. 2A and 2B). Further, the sliding slot 71 has a closed end 72 and an open end 74 opposite to the closed end 72. A recess 721 is formed on the bag attachment 7 and adjacent to the closed end 72 of the sliding slot 7, and the recess 721 can be cooperated with the protrusion 431 of the elastic buckle 43 (shown in Fig. 3) while the bag attachment 7 is combined with the tail portion 4.

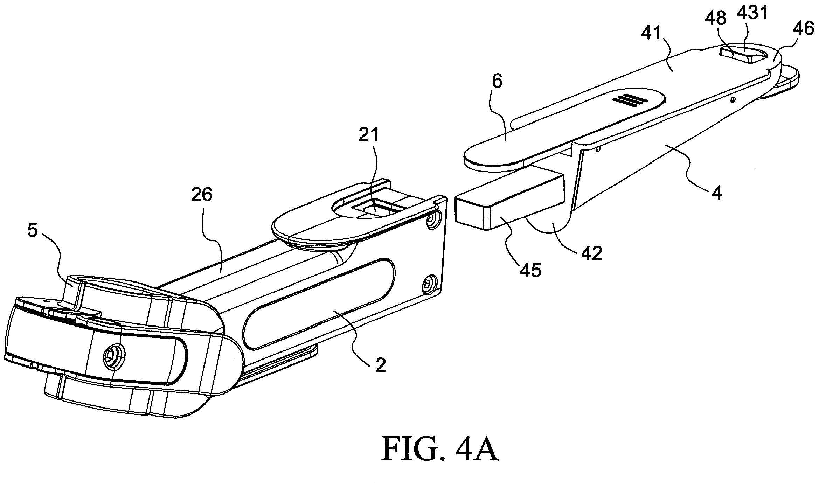

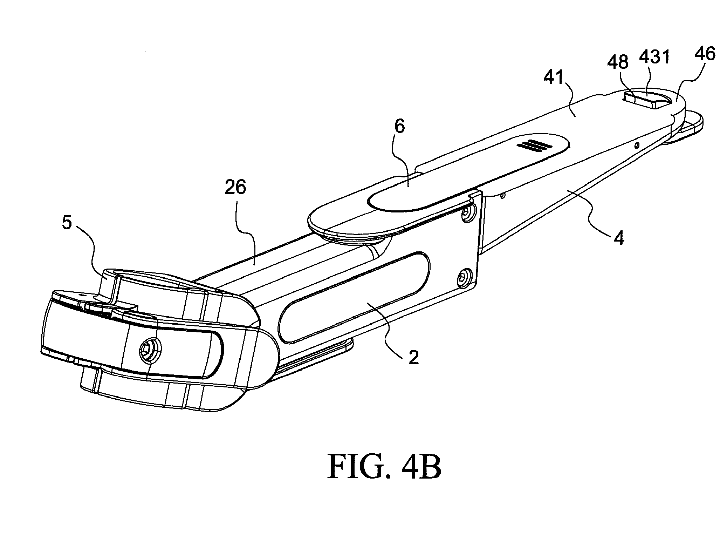

Fig. 4A and Fig. 4B show that the stem portion 2 and the tail portion 4 are combined in the horizontal configuration by inserting the shaft 45 of the tail portion 4 into the second aperture 23 of the stem portion 2. When the stem portion 2 and the tail portion 4 are combined in the horizontal configuration, the flange 47 of the tail portion 4 substantially follows the flange 29 of the stem portion 2 such that the contours of them are substantially smooth. Further, the first end 61 of the clip 6 extends to the first side 26 of the stem portion 2 and the protrusion 62 is embedded into the first aperture 21 by the spring force such that the tail portion 4 is attached to the stem portion 2 securely. To separate the tail portion 4 from the stem portion 2, the user can press the second end 63 of the clip 6 to lift the protrusion 62 from the first aperture 21 and thus release the clip 6.

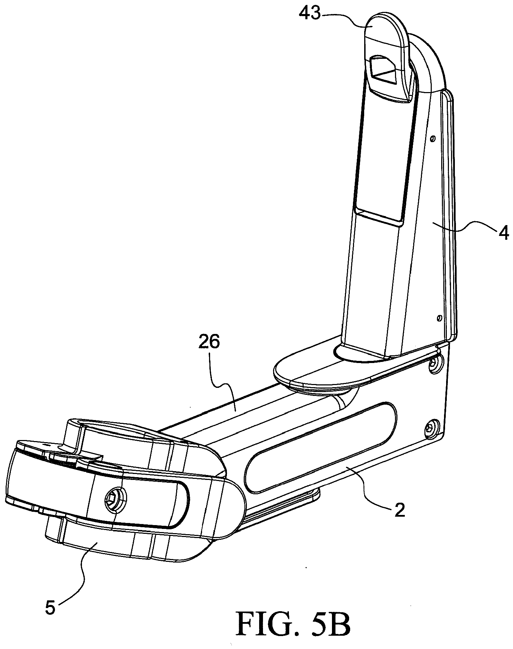

Fig. 5A and Fig 5B show that the stem portion and the tail portion are combined in the vertical configuration by inserting the shaft 45 of the tail portion 4 into the first aperture 21 of the stem portion 2. When the stem portion 2 and the tail portion 4 are combined in the vertical configuration, the second side 28 of the stem portion 2 and the third side 41 of the tail portion 4 are substantially coplanar. Further, the first end 61 of the clip 6 extends to the second side 28 of the stem portion 2 and the protrusion 62 is embedded into the second aperture 23 by the spring force such that the tail portion 4 is attached to the stem portion 2 securely. To separate the tail portion 4 from the stem portion 2, the user can press the second end 63 of the clip 6 to lift the protrusion 62 from the second aperture 23 and thus release the clip 6.

Fig. 6A and Fig. 6B show the combination of the tail portion 4 and the bag attachment 7. As shown in Figs. 6A and 6B, the tail portion 4 with the flange 47 slots into the sliding slot 71 of the bag attachment 7 from the open end 74 and is blocked by the closed end 72. The sliding slot 71 of the bag attachment 7 thus engages with the flange 47 of the tail portion 4 and the bag attachment 7 and the tail portion 4 are combined with each other. Further, when the stem portion 2 and the tail portion 4 are combined in the horizontal configuration, even the sliding slot 71 of the bag attachment 7 will engage with the flange 29 of the stem portion 2. Further, when the bag attachment 7 and the tail portion 4 are combined with each other, the protrusion 431 of the elastic buckle 43 extends through the aperture 48 of the tail portion 4 and engages with the recess 72 formed at the bag attachment 7 by elasticity. Thus, the elastic buckle 43 can further lock the bag attachment 7 to the tail portion 4.

Since the bag attachment 7 can be combined with the tail portion 4, the bag 79 with the bag attachment 7 can be mounted to the bicycle by the fixing system 1. Further, the user can position the bag 79 at a horizontal position or vertical position on the fixing system 1 by changing the combination of the stem portion 2 and the tail portion 4 (as shown in Figs. 2A and 2B).

Upon the above, the bag 79 can be mounted to the seat post 9 of the bicycle by the fixing system 1. Further, the position of the bag 79 can be changed while mounting to the seat post 9 of the bicycle (at a horizontal position or vertical position on the fixing system 1).

The present invention should not be considered limited to the particular examples described above, but rather should be understood to cover all aspects of the invention as fairly set out in the attached claims. Various modifications, equivalent processes, as well as numerous structures to which the present invention may be applicable will be readily apparent to those of skill in the art to which the present invention is directed upon review of the present specification. For example, the fixing system can be attached to the frame of the bicycle, and the different connectors for attaching the fixing system to the bicycle, and the modifications of the clip and the buckle. The claims are intended to cover such modifications and devices.

## Claims

1. A fixing system (1) for a seat post (9) of a bicycle, comprising:
a connector (5) for connecting to the seat post (9);
a stem portion (2) connected to the connector (5) and having a first side (26) and a second side (28) substantially perpendicular to the first side (26), wherein a first aperture (21) is formed in the first side (26) of the stem portion (2) and a second aperture (23) is formed in the second side (28) of the stem portion (2);
a tail portion (4) having a third side (41) and a fourth side (42) substantially perpendicular to the third side (41), and having a shaft (45) arranged at the fourth side (42) of the tail portion (4), and wherein the stem portion (2) and the tail portion (4) are combinable to be substantially perpendicular to one another while inserting the shaft (45) into the first aperture (21) of the stem portion (2), and wherein the stem portion (2) and the tail portion (4) are combinable to be substantially horizontal to one another while inserting the shaft (45) into the second aperture (23) of the stem portion (2); and
a bag attachment (7) being able to be combinable with the tail portion (4).

2. The fixing system (1) according to Claim 1, wherein a flange (47) is substantially formed at the peripheral of the third side (41) of the tail portion (4) and the bag attachment (7) has a sliding slot (71) for engaging with the flange (47) of the tail portion (4), and wherein the sliding slot (71) has a closed end (72) and an open end (74), whereby the tail portion (4) with the flange (47) can slot into the sliding slot (71) from the open end (74) and is blocked by the closed end (72) and thus the tail portion (4) and the bag attachment (7) are combinable with each other.

3. The fixing system (1) according to Claim 1 or 2, wherein the second side (28) of the stem portion (2) and the third side (41) of the tail portion (4) are substantially co-planar while inserting the shaft (45) into the first aperture (21) of the stem portion (2).

4. The fixing system (1) according to any of Claims 1 to 3, further comprising a spring-loaded clip (6) arranged at the third side (41) of the tail portion (4), wherein the clip (6) holds the tail portion (4) onto the stem portion (2) while they are combined with each other.

5. The fixing system according to Claim 4, wherein one end (61) of the clip (6) extends out of the fourth side (42) of the tail portion (4) and a protrusion (62) is formed at the end (61) of the clip (6) such that the protrusion (62) is embedded in the first aperture (21) of the stem portion (2) while the shaft (45) of the tail portion (4) is inserted into the second aperture (23) of the stem portion (2), and wherein the protrusion (62) is embedded in the second aperture (23) of the stem portion (2) while the shaft (45) of the tail portion (4) is inserted into the first aperture (21) of the stem portion (2).

6. The fixing system according to any of Claims 1 to 5, further comprising an elastic buckle (43) arranged at one end (46) of the tail portion (4), wherein the buckle (43) locks the tail portion (4) to the bag attachment (7) while they are combined with each other.

7. The fixing system according to Claim 6, wherein an aperture (48) is formed at the end (46) of the tail portion (4) and the buckle (43) has a protrusion (431) which extends through the aperture (48) of the tail portion (4) and substantially corresponds to a recess (721) formed at the bag attachment (7) and adjacent to the closed end (72) of the sliding slot (71).

8. The fixing system (1) according to any of Claims 1 to 7, wherein the connector (5) is a quick release connector.

9. The fixing system (1) according to any of Claims 1 to 8, wherein the connector (5) further has a mouth (52) for receiving the seat post (9) of a bicycle, and a handle 54 pivotally connected to the mouth (52).

10. The fixing system according to any of Claims 1 to 9, further comprising a strap (51) for wrapping the connector (5).

11. The fixing system according to any of Claims 1 to 10, further comprising a flange (29) formed at the first side (26) of the stem portion (2) and substantially around the first aperture (21).
